# EUROPEAN PATENT SPECIFICATION

(11) **EP 1 589 070 B1**
(45) Date of publication and mention of the grant of the patent: **12.03.2008**
(21) Application number: 04009278.5
(22) Date of filing: 20.04.2004
(51) Int. Cl.: C08L 23/10, C08K 3/26, C08K 3/34

(54) **Polymer composition with improved stiffness and impact strength**
Polymerzusammensetzung mit verbesserter Steifigkeit und Schlagzähigkeit
Composition de polymère à rigidité et résistance au choc ameliorées

(43) Date of publication of application: 26.10.2005
(73) Proprietor: Borealis Technology Oy, 06201 Porvoo (FI)
(72) Inventor: Reichelt, Norbert, Dr., 4501 Neuhofen/Krems (AT); Pham, Tung, Dr., 4040 Linz (AT); Gahleitner, Markus, Dipl.-Ing. Dr., 4501 Neuhofen/Krems (AT)
(74) Representative: Grünecker, Kinkeldey, Stockmair & Schwanhäusser Anwaltssozietät

(56) References cited:
- US-A- 5 317 035
- US-A- 5 948 839
- US-B1- 6 437 063

## Description

The invention relates to a novel polymer composition with an improved balance of mechanical and thermomechanical properties. More particularly, the invention relates to a polymer composition comprising polypropylene, a non-olefinic polymer, a compatibiliser and an inorganic filler. The novel polymer composition shows high stiffness, impact strength and heat deflection temperature.

### Technological background

The demand for polymeric materials combining different and frequently conflicting properties, like high stiffness and toughness or surface polarity and resistance to solvents, is growing in the marketplace. Polymer blends consisting of two or more chemically different polymers are one possible approach to solve this problem. Due to its wide application range, polypropylene is an ideal candidate for forming one of the components in such a polymer blend. A more polar component delivering additional properties to the blend will then be a preferred second component, resulting in materials with combined property profiles.

The market requires polypropylene blends with an increased impact strength in combination with high stiffness and heat deflection temperature, which is not achievable with conventional compounding of propylene-ethylene copolymers with impact modifiers and mineral fillers. Products overcoming these limitations have been introduced on the market e.g. the HIVALLOY polymer blend family (Basell), which suffered commercial limitations and were therefore not readily accepted.

### Object of the Invention

It is therefore the object of the invention to provide a polymer composition having an improved balance of stiffness, impact strength and heat deflection temperature. The polymer composition shall have stiffness and impact strength at ambient and low temperatures and heat deflection temperature at least at about the same level as the corresponding values of the polypropylene which is part of the polymer composition, while at least one parameter shall be higher than the respective parameter of the polypropylene.

Further objects of the invention are processes for producing the above polymer compositions.

The above object is achieved by a polymer composition comprising
50 - 90 wt% of a propylene polymer having a crystallisation temperature T_{cryst} ≥ 117 °C, preferably ≥ 125 °C, the propylene polymer being a propylene homopolymer and/or a copolymer containing up to 10 wt% of ethylene and/or C₄-C₈ α-olefins,
4 - 35 wt% of a thermoplastic non-olefinic polymer having higher flexural modulus than the propylene polymer,
0.5 - 10 wt% of a compatibiliser which comprises at least one copolymer where at least one of the comonomers is propylene or one of the monomer units of the non-olefinic polymer,
4.5 - 45 wt% of a disperse phase having an average particle size ≤ 1 *µ*m, which is comprised of the thermoplastic non-olefinic polymer and compatibiliser,
5 - 45 wt% of a mineral filler having an average particle size ≤ 1 *µ*m.

Polymer blends based on highly crystalline polypropylene, another non-olefinic polymer and a mineral filler, in which the average particle sizes of both the disperse polymer phase and the mineral filler are below 1 *µ*m have been found to exhibit especially advantageous properties. Such compositions combine high stiffness and heat deflection temperature with high toughness and good surface appearance.

The propylene polymer used for the polymer composition according to the invention is a highly crystalline (T_{cryst} ≥ 117 °C) propylene homopolymer or propylene copolymer or mixtures thereof. If the propylene polymer comprises a propylene copolymer, the copolymer contains up to 10 wt% of ethylene and/or C₄-C₈ α-olefins. Among possible comonomers, ethylene and 1-butene are preferred.

The polymer compositions of the invention are preferably used for extrusion and injection moulding. Therefore the preferred melt flow rate for the polymer composition is in the range of from 0.1 to 60 g/10 min. This is also the preferred MFR range for the propylene polymer.

Since the polymer compositions shall have high stiffness, it is preferred to use propylene polymers which already have a rather high stiffness.

According to an embodiment, this can be achieved by using crystalline propylene polymers having an isotacticity IRτ of ≥ 96 %, preferably ≥ 97.5 %.

The IRτ of a propylene polymer is determined by Infrared spectroscopy and calculated as described in EP 0 277 514 A2 on page 3 (especially column 3, line 37 to column 4, line 30) and page 5 (column 7, line 53 to column 8, line 11).

The crystallinity of propylene polymers can also be increased by nucleation, i.e. by adding suitable nucleating agents. Therefore, the propylene polymer used for the present invention may contain suitable nucleating agents, preferably α-nucleating agents. In general, it is observed, that the addition of α-nucleating agents to propylene polymers increases their stiffness, while the addition of β-nucleating agents - although crystallinity is increased just like with α-nucleating agents - decreases the stiffness of propylene polymers. In general, the effects on impact strength of the different nucleation techniques is reverse, i.e. α-nucleation decreases impact strength, β-nucleation increases impact strength.

α-nucleation is therefore preferred for the purpose of a high absolute level of stiffness, however, the object of the invention, i.e. achieving for the polymer composition a higher balance of mechanical and thermomechanical parameters than the underlying propylene polymer, is also achieved with β-nucleation.

Suitable α-nucleating agents include talc having a particle size of 0.01 - 1.0 *µ*m, sodium benzoate, sodium-2,2'-methylene-bis(4,6-di-t-butylphenyl)phosphate, sodium-bis(4-t-butylphenyl)phosphate, 1,3,2,4-di(3',4'-dimethylbenzylidene)sorbitol and "ADK STAB NA21 E" available from Asahi Denka Kogyo (Japan).

If talc is used as nucleating agent, it is usually present in an amount of 0.01 - 1.0 wt%, which is an effective amount for α-nucleating, but which is not a sufficient amount where talc would already act as filler.

The propylene polymers used for the present invention are therefore characterised by a crystallisation temperature T_{cryst} of at least 117 °C, preferably of at least 125 °C. Such high crystallisation temperatures are usually associated with high isotacticity and a comparatively broad molecular weight distribution, both factors which are also favouring a high stiffness.

The further component of the polymer composition of the present invention is a thermoplastic non-olefinic polymer, which has a higher flexural modulus than the propylene polymer.

Suitable non-olefinic polymers include polystyrene, polycarbonate and poly-methylmethacrylate.

The non-olefinic polymer is present in an amount of from 4 - 35 wt%. Smaller amounts than 4 wt% would not have the desired effect on stiffness of the polymer composition.

A preferred non-olefinic polymer is polystyrene, either as a homopolymer or as copolymer with polar comonomers like maleic anhydride or substituted styrenes.

A still further component of the polymer composition of the present invention is a compatibiliser, which comprises at least one copolymer, which has at least one comonomer in common with either the propylene polymer or the non-olefinic polymer.

The compatibiliser is essential for a homogeneous dispersion of the non-olefinic polymer in the polypropylene matrix. The non-olefinic polymer, together with the compatibiliser, form a disperse phase within the polypropylene matrix. The effectiveness of the compatibiliser and thus the homogeneity of the dispersion can be measured by the average particle size of the disperse phase.

Suitable compatibilisers include grafted and ungrafted copolymers. Grafted polymers include propylene homo- and copolymers grafted with styrene, maleic anhydride (PP-g-MAH), styrene-methacrylate copolymer (SMA) and methyl-methacrylate. Ungrafted copolymers are either di- or tri-block copolymers or random copolymers. Di-block copolymers include styrene-butadiene block copolymers and methyl-methacrylate-butadiene block copolymers, either in native or in hydrogenated form. Tri-block copolymers include styrene elastomers, more specifically styrene-ethylene-butene-styrene terpolymers (SEBS), styrene-ethylenepropylene-styrene terpolymers (SEPS) and styrene-isoprene-styrene terpolymers (SIS), but also acrylonitrile-styrene-acrylate terpolymers (ASA) or methyl-methacrylate-butadiene-methyl-methacrylate terpolymers, again either in native or in hydrogenated form. Random copolymers include styrene/maleic anhydride copolymers (SMA), ethylene-methacrylic acid copolymers (EMA) and ethylene-vinyl acetate copolymers (EVA). Typical commercially available products are Polybond® (PP-g-MAH) from Crompton Chemical Corp., Tuftec® (SBS or SEBS) from Asahi Kasei Chemicals Corp., Kraton® (SBS or SEBS) from Kraton Polymers Corp. and SMA® resins (SMA) from Sartomer Company Inc.

The non-olefinic polymer together with the compatibiliser is forming a disperse phase having a particle size of ≤ 1 *µ*m. Such a small particle size is essential for good impact strength of the polymer composition and it can be achieved with proper choice of the type and amount of compatibiliser.

The amount of compatibiliser is from 0.5 - 10 wt%. Smaller amounts than 0.5 wt% do not have the desired compatibilising effect, while larger amounts than 10 wt% are negatively influencing the property profile of the polymer composition.

A still further component of the polymer composition of the present invention is a mineral filler having an average particle size of ≤ 1*µ*m.

As with the particle size of the disperse phase, it is believed, that an upper particle size limit of 1 *µ*m is essential, because micro-crazes and -fractures, which are occurring under mechanical load, are in the same order of magnitude. A disperse phase with an average particle size of ≤ 1 *µ*m is effectively dissipating the energy which is required by microcrazes for their propagation. An inorganic filler with an average particle size of ≤ 1 *µ*m is effectively strengthening the polymer composition.

The amount of inorganic filler is from 5 - 45 wt%.

The ratio of non-olefinic polymer to compatibiliser is at least 1:1, preferably at least 2:1, more preferably at least 3:1.

The compatibilising effect is increasing within the above specified range of ratios, because excessive use of compatibiliser would result in a separate phase being formed.

The mineral filler is preferably selected from one or more of calcium carbonate, talc and montmorillonite.

These three fillers have additional advantages, e.g. food contact approval, the absence of metal contaminations which would otherwise negatively affect the polypropylene stability and also comparatively low cost.

It is further preferred, that the mineral filler does not comprise more than 2 wt% (based on the amount of filler) of organic surface modification. Organic surface modification, e.g. stearic acid used for coating CaCO₃, has the advantage of improving dispersibility of the inorganic filler in the polymer matrix, it has, however, the disadvantages of adversely affecting the optical appearance of parts produced from the polymer compositions, and of increasing volatile emissions in the production, processing and application of the polymer compositions. The surface modifiers sometimes are released from the filler surface at temperatures in the range of usual processing temperatures for polypropylene, i.e. 200-300 °C. Such emissions impairing the smell and limiting the applicability have especially been found when applying so-called "organoclays" usually containing very high amounts of surface modifiers. Examples are organically modified montmorillonites like Nanofil 16 of Südchemie AG, which contains about 40 wt% of organic modifier decomposing at temperatures between 270 and 370 °C.

According to a specific embodiment, the polymer composition of the present invention comprises 55 - 85 wt% propylene polymer. At lower polypropylene contents the processability, more specifically the flowability, can be severely impaired, while at higher polypropylene contents the desired positive effects on mechanical properties may not be sufficient.

According to a still further embodiment, the polymer composition comprises 10 - 25 wt% of the non-olefinic polymer and 2 - 5 wt% of the compatibiliser. It was observed, that a ratio of 1:5 between compatibiliser and non-olefinic polymer quantities gives the desired particle size effect without deteriorating other properties.

According to a specific embodiment of the invention, the non-olefinic polymer comprises monomer units which are radically polymerisable between the glass transition temperature T_{g} and the melting temperature Tₘ of the propylene polymer.

This embodiment is especially important, when the polymer composition is produced by "solid-phase grafting". There the non-olefinic polymer and the compatibiliser(s) are radically polymerised in the presence of solid polypropylene powder, thereby partially grafting the non-olefinic monomer onto the polypropylene chain. In order for the polypropylene to be solid during the polymerisation process, it is necessary that it is performed at a temperature below the melting temperature Tₘ of the propylene polymer, preferably at least 20 °C below Tₘ. It is also necessary, that the monomers of which the non-olefinic polymer and the compatibiliser(s) are comprised, are able to diffuse into the polypropylene particles. Therefore, the polymerisation process has to be performed at a temperature above the glass transition temperature T_{g} of the propylene polymer, preferably at least 10 °C above T_{g}.

Preferred monomers for the non-olefinic polymer include: styrene and methylmethacrylate.

A further aspect of the invention is a process for producing the inventive polymer compositions. A suitable process comprises the steps of
a) mixing 50 - 90 parts per weight of a propylene polymer having a crystallisation temperature T_{cryst} ≥ 117 °C, the propylene polymer being a propylene homopolymer and/or a copolymer containing up to 10 wt% of ethylene and/or C₄-C₈ α-olefins,
   with 5 - 45 parts per weight of monomers which are radically polymerisable between the glass transition temperature T_{g} and the melting temperature Tₘ of the propylene polymer
   and with 0.1 - 1.0 parts per weight of one or more radical forming agents, preferably organic peroxides, and/or using radical initiating radiation during step b),
b) polymerising the monomers at a temperature between the glass transition temperature T_{g} and the melting temperature Tₘ of the propylene polymer for 0.5 to 8 hours, and where type and amount of the monomers and the polymerisation conditions are selected to give a non-olefinic polymer having a higher flexural modulus than the propylene polymer,
c) melt mixing the resulting polymer composition at a temperature of at least 30 °C above the melt temperature Tₘ of the propylene polymer,
d) cooling and solidifying the polymer composition, whereby
   a total of 5 - 45 parts per weight of a mineral filler having an average particle size ≤ 1 *µ*m is added before, during or after step a) and/or b) and/or c), provided that an addition of the filler after step c) is followed by an additional melt mixing step before step d). In any of the melt-mixing steps usual stabilisers (antioxidants and UV or heat stabilisers) can be added to reduce the degradation of the applied polypropylene.

The above process of "solid-phase grafting" has the advantage that both the non-olefinic polymer and the compatibiliser are produced in situ, resulting in an economical advantage over melt compounding.

The monomers which are polymerisable between the glass transition temperature T_{g} and the melting temperature Tₘ of the propylene polymer are preferably selected from one or more of styrene and methylmethacrylate. Optionally and depending upon the type of compatibiliser, further monomers are used in a minor amount which are preferably selected from maleic anhydride, butadiene, methacrylate and isoprene. The ratio between main monomer and other monomers must be chosen such that the resulting non-olefinic polymer has a higher flexural modulus than the polypropylene.

The peroxide which is used according to an embodiment for the process of the invention is preferably selected from one or more of tert-butyl peroxybenzoate, di-benzoyl peroxide, di-tert-butyl peroxide, bis-tert-butyl-peroxyisopropyl benzene, tert-butyl-cumyl peroxide, benzoyl peroxide and potassium persulphate.

The polymer compositions according to the invention are also obtainable by melt compounding the mixture of the individual components.

Therefore, the invention also relates to a process for producing the inventive polymer compositions comprising the steps of
mixing 50 - 90 parts per weight of a propylene polymer having a crystallisation temperature T_{cryst} ≥ 117 °C, the propylene polymer being a propylene homopolymer and/or a copolymer containing up to 10 wt% of ethylene and/or C₄-C₈ α-olefins,
with 5 - 45 parts per weight of a mineral filler having an average particle size ≤ 1 *µ*m and
with 4 - 35 wt% of a thermoplastic non-olefinic polymer having higher flexural modulus than the propylene polymer, and
with 0.5 - 10 wt% of a compatibiliser which comprises at least one copolymer where at least one of the comonomers is propylene or one of the monomer units of the non-olefinic polymer,
melt mixing the resulting mixture at a temperature of at least 30 °C above the melt temperature Tₘ of the propylene polymer,
cooling and solidifying the polymer composition. In the melt-mixing steps usual stabilisers (antioxidants and UV or heat stabilisers) can be added to reduce the degradation of the used propylene polymer.

It is preferred for the melt mixing process to be performed in a twin screw extruder.

### Production of propylene polymer

The propylene polymer may be produced by single- or multistage process polymerisation of propylene or propylene and α-olefin and/or ethylene such as bulk polymerisation, gas phase polymerisation, slurry polymerisation, solution polymerisation or combinations thereof using conventional catalysts. Those processes are well known to one skilled in the art.
A preferred process is a combination of bulk slurry loop reactor(s) and gas phase reactor(s). A homo- or copolymer can be made either in loop reactors or in a combination of loop and gas phase reactor. The polymer produced in this way may be transferred into another reactor, where e.g. a different propylene polymer is polymerised on top of the product of the first reactor, e.g. when propylene/α-olefin rubber is polymerised. Preferably this polymerisation step is done in a gas phase polymerisation.
A suitable catalyst for the polymerisation of the propylene polymer is any stereospecific catalyst for propylene polymerisation which is capable of polymerising and copolymerising propylene and comonomers at a temperature of 40 to 110°C and at a pressure from 10 to 100 bar. Ziegler Natta catalysts as well as metallocene catalysts are suitable catalysts.
One skilled in the art is aware of the various possibilities to produce propylene homo- and copolymers and will simply find out a suitable procedure to produce suitable polymers which are used in the present invention.

The resulting polymer powder particles may be pelletised in a conventional compounding extruder with various additives, which are generally used in thermoplastic polymer compositions, such as stabilizers, antioxidants, acid neutralizing agents, ultraviolet absorbers, clarifying agents, antiblocking agents, antistatic agents, antifogging agents, etc. For the solid-phase grafting process the powder particles can also be used in native form.

### Production of non-olefinic polymer

The preferred non-olefinic polymer is polystyrene. Polystyrene may be produced by free radical polymerisation in bulk or suspension or by cationic polymerisation, which allows an improved control of the molecular weight distribution. The latter reaction is carried out in an inert organic solvent environment which provides the reaction medium for this cationic polymerisation reaction. The most common solvent used for this reaction is 1,2-dichloroethane (EDC). Other suitable solvents include carbon tetrachloride, ethyl chloride, methylene dichloride, benzene, toluene, ethylbenzene, or chlorobenzene. The preferred initiator is a mixture of boron trifluoride and water. The usual reaction temperature range is 40 - 70 °C. In both varieties of production various comonomers can be applied, with comonomers of a polar nature like maleic anhydride being of special interest.

### Production of compatibiliser

Graft copolymers suitable as compatibilisers may be produced by solid-phase grafting, melt grafting or solution grafting processes using polypropylene homo- or copolymers as base material and suitable monomers like styrene, maleic anhydride or methyl-methacrylate. Solid-phase grafting may be carried out in stirred powder reactors in discontinuous or continuous mode with polypropylene powder or granules and liquid monomers. Solution grafting may be carried out in dilute solutions of polypropylene at elevated temperatures in a suitable solvent. Melt grafting may be carried out in discontinuous and continuous kneaders, twin screw extruders and single screw extruders with special mixing sections and co-kneaders, at temperatures significantly above the melting temperature of the applied polypropylene. Di- and tri-block copolymers suitable as compatibilisers may be produced by living anionic polymerisation in solution. Random copolymers suitable as compatibilisers may be produced by a wide variety of polymerisation processes via an ionic or radical route.

The compositions of the invention are preferably produced in two alternative ways: By solid-phase grafting or by melt blending. Both methods have specific advantages, making them specially suited under certain circumstances. Polypropylenes used for these processes can be homopolymers or copolymers, including mixtures of the same.

### Solid-phase grafting process

This process is advantageous in the production of bigger quantities of homogeneous composition. It is performed by combining the base polymer in the form of polypropylene powder or granules, one or more liquid monomers and one or more mineral fillers of suitable characteristics in an inert atmosphere at temperatures between the glass transition temperature and the melting temperature of the polypropylene used as base polymer, initiating a radical reaction, agitating said mixture for a certain time and subsequently homogenizing the resulting composition at a temperature above the melting temperature of the base polymer.

In addition to conventional free radical polymerisation techniques also living radical polymerisation and atom transfer radical polymerisation (ATRP) can be applied for creating the second polymer phase. ATRP is a special controlled living polymerisation based on the use of radical polymerisation with the use of a catalytic agent.

Suitable monomers for this solid-phase grafting and polymerisation procedure are all monomers which can be polymerised at temperatures between the glass transition temperature and the melting temperature of the polypropylene used as base polymer. The lower limit is defined by the necessity for diffusion of the monomer into the polypropylene, the upper limit by the necessity to keep the base polymer solid. Usually, one or more main monomers and optionally secondary monomers are used.

Typically, such main monomers are of the vinyl type, meaning that they contain a terminal double bond. Examples for such suitable main monomers are styrene, vinyl-cyclohexane and substituted styrenes, e.g. methylstyrene and 4-methoxystyrene. Further examples are methylmethacrylate, glycidylmethacrylate, ethyl-vinyl acetate and 2-hydroxyethyl methacrylate. Examples of secondary monomers which may optionally also be present include butadiene, isoprene, methacrylate and mono-unsaturated compounds like maleic anhydride or fumaric anhydride. These monomers can be used in pure form or in mixtures of two or more. The ratio between main monomer and secondary monomers are chosen such that the resulting non-olefinic polymer has a higher flexural modulus than the propylene polymer.

The minerals added in the same process will normally adsorb a certain part of the monomer, allowing surface grafting reactions and improving the particle-polymer interaction, thus additionally improving the mechanical performance. The mineral particles must have an average particle size, more precisely defined as the median particle size, of no more than 1 *µ*m. Suitable minerals may have an isotropic or anisotropic particle morphology, optionally being surface treated with minor amounts of polarity reducing substances. Typical examples of mineral fillers are calcium carbonate, talc, montmorillonite, muscovite or sepiolithe. Examples of suitable surface treatments are fatty acids (e.g. stearic acid or palmitic acid) and organosilanes.

The radical polymerisation can be initiated by chemical sources of radicals like peroxides or azo compounds, but also by irradiation with electrons, UV radiation or gamma radiation. The course of the polymerisation reaction and the properties of the polymers formed in this process can be controlled through temperature, mixing speed, initiator concentration and duration of the reaction. An extrusion step in a single or twin screw extruder above the melting temperature of the base polymer will normally follow the reaction, in which residual monomers are brought to reaction or removed by degassing. In the extrusion step usual stabilisers (antioxidants and UV or heat stabilisers) can be added to reduce the degradation of the applied polypropylene.

### Melt blending process

This process is advantageous in the production of smaller quantities or for a frequent variation of the composition. It is performed by combining the base polymer in the form of polypropylene powder or granules, one or more non-olefinic polymers having a comparable processing range and one or more mineral fillers of suitable characteristics in a melt mixing device at temperatures above the melting points and main glass transition points of all polymeric components.

Various non-olefinic polymers chemically different from polypropylene can be used as second polymer component, pure or in mixtures with each other provided that these are homogeneous. Preferred examples of such polymers are polystyrene, polycarbonate and poly-methylmethacrylate. The minerals suitable for the melt blending process are the same as described before for the solid-phase grafting process. In the melt-mixing step usual stabilisers (antioxidants and UV or heat stabilisers) can be added to reduce the degradation of the applied polypropylene.

Melt mixing devices suited for this process are discontinuous and continuous kneaders, twin screw extruders and single screw extruders with special mixing sections and co-kneaders. The residence time must be chosen such that a sufficiently high degree of homogenization is achieved, with temperature, torque and rotation speed being additional parameters.

Due to the excellent mechanical and thermomechanical properties of the polymer compositions according to the invention they are perfectly suitable for producing articles with an improved balance of mechanical and thermomechanical properties for automotive, electric and electronic appliance and other technical applications.

### Measurement methods

### MFR

The melt flow rates were measured with a load of 2.16 kg at 230 °C. The melt flow rate is that quantity of polymer in grams which the test apparatus standardised to ISO 1133 extrudes within 10 minutes at a temperature of 230 °C under a load of 2.16 kg.

### Melting Temperature Tₘ

Melting temperature (peak temperature) Tₘ was measured with differential scanning calorimetry (DSC) by using a temperature increasing rate of 10 K/min, according to ISO 3146 in the second heat at a heating rate of 10 K/min.

### Crystallisation temperature T_{cryst}

Crystallisation temperatures T_{cryst} are determined by DSC measurement according to ISO 3146 at a cooling rate of 10 K/min after a first heating to 200 °C.

### Glass transition temperatures T_{g}

Glass transition temperatures T_{g} are determined with Dynamic Mechanical Thermal Analysis (DMTA). The tests are carried out in accordance with ISO 6721-2 on specimens of 60×10×1 mm cut from compression moulded plaques. In a measurement at 1 Hz (free oscillation) a temperature range of at least -100 to +150 °C is covered, using a heating rate of 1 °C/min. The storage modulus G' and the tangent of the loss angle tan(δ) are the primary results of the tests; from tan(δ) the temperatures - peak position and peak broadness - of the various mobility transitions, such as the glass transition temperature T_{g}, in the systems, which can be attributed to the phases present, are determined.

### Particle size determination of disperse phase

The particle size distribution of the second polymer phase is determined from scanning electron micrographs, for which specimens of the respective materials are contrasted with ruthenium tetroxide (RuO₄) and cut, then investigated in an electron microscope. Uncorrected profile size distributions are assumed to represent the particle size distribution. Weight average particle sizes are subsequently calculated from these distributions. Details of such determinations are described in the literature (see Poelt et al. J.Appl.Polym.Sci. 78, 2000, 1152-61).

### Particle size determination of mineral filler

For the mineral components, the average particle size (usually defined as the median or 50%-quantil of the particle size distribution determined in a normal or laser light scattering analysis) is supplied by the respective suppliers or producers.

### Mechanical and optical characterization

The mechanical performance of the materials is determined on specimens injection moulded according to ISO 1873-2 standard conditions not earlier than 96 hours after moulding.

### Flexural Modulus

The flexural test was carried out according to the method of ISO 178 by using injection moulded test specimens as described in EN ISO 1873-2 (80 × 10 × 4 mm).

### Impact strength

The Charpy notched and unnotched impact strength was determined according to ISO 179 / 1eA at 23 °C and according to ISO 179 / 1eU at -20 °C by using injection moulded test specimens as described in EN ISO 1873-2 (80 × 10 × 4 mm).

### Heat Deflection Temperature

Heat Deflection Temperature (HDT) was determined according to ISO 75 B using injection moulded test specimens as described in EN ISO 1873-2 (80 × 10 × 4 mm).

### Examples

### Base materials

The following materials were used for the preparation of the examples and comparative examples.
Polymer 1: PP homopolymer powder with an MFR (230°C/2.16 kg) of 0.5 g / 10 min, IRτ-value 98%
Polymer 2: High crystallinity PP homopolymer with an MFR (230 °C/2.16 kg) of 2.8 g/10 min, commercially available from Borealis GmbH as "Bormod HC905TF"
Polymer 3: High crystallinity PP homopolymer with an MFR (230 °C/2.16 kg) of 8 g/10 min, commercially available from Borealis GmbH as "HD601 CF"
Polymer 4: Polystyrol 168 N, PS homopolymer with an MVR (ISO 1133) (200 °C/5 kg) of 1.5 ml/10 min, commercially available from BASF AG.
Polymer 5: Kraton® G 1652 (SEBS), with a styrene content of - 30 wt%, commercially available from Kraton Polymers
Polymer 6: SMA® 2000 (SMA), with a styrene / maleic anhydride molar ratio of - 2:1 and a weight average molecular weight of 7500 g/mol, commercially available from Sartomer Corp.
Polymer 7: Polybond® 3200 (PP-g-MAH), propylene homopolymer grafted with - 1 wt% maleic anhydride and an MFR (190 °C/2.16 kg) of 110 g/10 min, commercially available from Crompton Chemical Inc.
CaCO₃: Socal U1S1 (PCC) with a median average particle size of 0.1 µm; precipitated Calcium carbonate with primary particle size 0.08 µm; coated with 1 wt% stearic acid, commercially available from Solvay SA
   MMT: Nanofil 757, unmodified montmorillonite with a median average particle size of 0.9 *µ*m, commercially available from Südchemie AG
   Talc: Luzenac A3, unmodified talc with an average particle size of 0.9 µm, commercially available from Talc de Luzenac S.A.

A number of examples was prepared according to the described procedures. The compositions of the examples and comparative examples and their properties are shown in Tables 1 and 2.

### Preparation of solid phase grafted mixtures ("RE" in the examples)

The solid-phase grafted mixtures are produced in a stirred 5 litre reactor, which is first purged thoroughly with nitrogen. The polypropylene and the mineral filler are then added in powder form, followed by intensive purging with nitrogen, while keeping the reactor at ambient temperature. A slight nitrogen excess pressure is then maintained during the whole reaction. The respective monomers are mixed in liquid form with 0.4 wt% (in relation to the total composition) of tert-butyl peroxybenzoate (Trigonox C by Akzo Nobel), followed by slow addition of the resulting mixture to the powder while stirring slowly. This stirring is continued at ambient temperature for 30 minutes, followed by a stepwise temperature increase to 125 °C. At this temperature the reaction is continued for 240 minutes (4 hours), then the reactor is cooled down again to ambient temperature. The resulting powdery mixture is mixed with 0.2 wt% of a conventional antioxidant mixture (Irganox B225 by Ciba Speciality Chemicals) and fed to a 24 mm twin-screw extruder (type: PRISM TSE 24), where it is mixed and pelletised at an average barrel temperature of 210 °C.

### Preparation of melt-blended mixtures ("CO" in the examples)

For the melt-blended mixtures, the polypropylene, already containing 0.2 wt% of a conventional antioxidant mixture (Irganox B225 by Ciba Speciality Chemicals), the mineral filler, the non-olefinic polymer and the compatibiliser(s) were dry blended in a conventional Henschel mixer. The premixed components were fed to the main hopper of a 24 mm twin-screw extruder (type: PRISM TSE 24). Mixing and pelletising was then carried out at an average barrel temperature of 210 °C.

**Table 1**

| **Ex.No.** | **Prod.** | **PP** | **PP** | **PS** | **Compatibiliser** | | **Mineral filler** | |
|---|---|---|---|---|---|---|---|---|
| | **mode** | | **type** | **polymer 4** | **type** | **amt.** | **type** | **amt.** |
| | **-** | **wt%** | **-** | **wt%** | **-** | **wt%** | **-** | **wt%** |
| **E1** | **RE** | 70 | 1 | 13 | PP-g-SMA | 7 | CaCO3 | 10 |
| **E2** | **RE** | 70 | 1 | 15 | PP-g-PS | 5 | MMT | 10 |
| **E3** | **RE** | 70 | 1 | 13 | PP-g-SMA | 7 | MMT | 10 |
| **E4** | **CO** | 65 | 2 | 20 | 5 | 5 | CaCO3 | 10 |
| **E5** | **CO** | 65 | 2 | 20 | 5 | 5 | Talc | 10 |
| **E6** | **CO** | 70 | 2 | 15 | 6 | 5 | CaCO3 | 10 |
| **E7** | **CO** | 70 | 2 | 15 | 7 | 5 | Talc | 10 |
| | | | | | | | | |
| **C1** | **RE** | 80 | 1 | 20 | PP-g-PS | 5 | none | 0 |
| **C2** | **RE** | 80 | 1 | 12 | PP-g-SMA | 7 | none | 0 |
| **C3** | **CO** | 80 | 2 | 20 | none | 0 | none | 0 |
| **C4** | **CO** | 100 | 3 | 0 | none | 0 | none | 0 |
| **C5** | **CO** | 90 | 3 | 0 | none | 0 | CaCO3 | 10 |
| **C6** | **CO** | 70 | 3 | 20 | none | 0 | Talc | 10 |
| **C7** | **CO** | 70 | 3 | 20 | none | 0 | MMT | 10 |
| **C8** | **CO** | 67.5 | 3 | 20 | 5 | 2.5 | CaCO3 | 10 |

**Table 2**

| **Ex.No.** | **MFR** | **Particle size avg.** | | **Flex.** | **Charpy ISO 179** | | **HDT** |
|---|---|---|---|---|---|---|---|
| | **230°C/2,16kg** | **PS** | **Mineral** | **Modulus** | **1eA +23°C** | **1eU -20°C** | **ISO75B** |
| | **g/10min** | **µm** | **µm** | **MPa** | **kJ/m²** | **kJ/m²** | **°C** |
| **E1** | 17.9 | 0.2 | 0.1 | 1879 | 3.23 | 8.6 | 91 |
| **E2** | 0.5 | 0.3 | 0.9 | 2068 | 4.65 | 14.8 | 90 |
| **E3** | 0.4 | 0.2 | 0.9 | 2203 | 3.21 | 10.9 | 103 |
| **E4** | 3.2 | 0.9 | 0.1 | 2084 | 3.91 | 14.8 | 99 |
| **E5** | 3.2 | 0.9 | 0.9 | 2673 | 3.24 | 20.0 | 108 |
| **E6** | 3.9 | 0.9 | 0.1 | 2420 | 2.07 | 11.6 | 110 |
| **E7** | 3.5 | 0.9 | 0.9 | 2580 | 2.12 | 12.3 | 107 |
| | | | | | | | |
| **C1** | 16.8 | 0.2 | - | 1618 | 1.51 | 7.1 | 89 |
| **C2** | 11.7 | 0.3 | - | 1786 | 1.95 | 8.6 | 90 |
| **C3** | 3.2 | 2.1 | - | 1917 | 1.52 | 6.5 | 90 |
| **C4** | 9.2 | - | - | 1258 | 2.37 | 15.0 | 102 |
| **C5** | 8.1 | - | 0.1 | 1660 | 4.65 | 14.8 | 98 |
| **C6** | 8.1 | 2.3 | 3.5 | 2021 | 0.89 | 5.5 | 107 |
| **C7** | 8.1 | 2.2 | 0.9 | 1754 | 1.54 | 6.2 | 91 |
| **C8** | 7.0 | 1.5 | 0.1 | 2010 | 1.26 | 8.2 | 95 |

The composition of the solid phase grafting products ("RE" in tables) was analyzed by dissolving the product in boiling xylene, cooling the resulting mixture and separating the solid part (consisting of PP and styrene- or SMA-grafted PP) by filtration. From the difference between this weight fraction and the fraction of the originally used polypropylene the grafted part can be calculated. As a control the xylene-soluble part (PS/SMA and atactic fraction of PP) can be precipitated with acetone and weighed separately. In case of the melt blending products ("CO" in the tables) no separate analysis is necessary.

## Claims

1. Polymer composition comprising
50 - 90 wt% of a propylene polymer having a crystallisation temperature T_{cryst} ≥ 117°C, preferably ≥ 125 °C, the propylene polymer being a propylene homopolymer and/or a copolymer containing up to 10 wt% of ethylene and/or C₄-C₈ α-olefins,
4 - 35 wt% of a thermoplastic non-olefinic polymer having higher flexural modulus than the propylene polymer,
0.5 -10 wt% of a compatibiliser which comprises at least one copolymer where at least one of the comonomers is propylene or one of the monomer units of the non-olefinic polymer,
4.5 - 45 wt% of a disperse phase having an average particle size ≤ 1 µm, which is comprised of the thermoplastic non-olefinic polymer and compatibiliser,
5-45 wt% of a mineral filler having an average particle size ≤ 1 µm.

2. Polymer composition according to claim 1, **characterised in that** the ratio of non-olefinic polymer to compatibiliser is at least 1:1, preferably at least 2:1, more preferably at least 3:1.

3. Polymer composition according to one of claims 1 or 2, **characterised in that** the mineral filler is selected from one or more of calcium carbonate, talc and montmorillonite.

4. Polymer composition according to one of claims 1 - 3, **characterised in that** it comprises 55 - 85 wt% propylene polymer.

5. Polymer composition according to one of claims 1-4, **characterised in that** that it comprises 10-25 wt% of the non-olefinic polymer and 2-5 wt% of the compatibiliser.

6. Polymer composition according to one of claims 1-5, **characterised in that** the non-olefinic polymer comprises monomer units which are radically polymerisable between the glass transition temperature T_{g} and the melting temperature Tₘ of the propylene polymer.

7. Process for producing a polymer composition according to one of claims 1-6, comprising the steps of
a) mixing 50-90 parts per weight of a crystalline propylene polymer having a crystallisation temperature T_{cryst} ≥ 117°C, the propylene polymer being a propylene homopolymer and/or a copolymer containing up to 10 wt% of ethylene and/or C₄-C₈ α-olefins,
with 5 - 45 parts per weight of monomers which are radically polymerisable between the glass transition temperature T_{g} and the melting temperature Tₘ of the propylene polymer,
and with 0.1 -1.0 parts per weight of one or more radical forming agents, preferably organic peroxides, and/or using radical initiating radiation during step b),
b) polymerising the monomers at a temperature between the glass transition temperature T_{g} and the melting temperature Tₘ of the propylene polymer, for 0.5 to 8 hours and where type and amount of the monomers and the polymerisation conditions are selected to give a non-olefinic polymer having a higher flexural modulus than the propylene polymer,
c) melt mixing the resulting polymer composition at a temperature of at least 30 °C above the melt temperature Tₘ of the propylene polymer,
d) cooling and solidifying the polymer composition, whereby
a total of 5 - 45 parts per weight of a mineral filler having an average particle size ≤ 1 *µ*m is added before, during or after step a) and/or b) and/or c), provided that an addition of the filler after step c) is followed by an additional melt mixing step before step d).

8. Process according to claim 7, **characterised in that** the monomers are selected from one or more of styrene and methylmethacrylate and optionally one or more of maleic anhydride, butadiene, methacrylate and isoprene.

9. Process according to one of claims 7 or 8, **characterised in that** the peroxide is selected from one or more of tert-butyl peroxybenzoate, di-benzoyl peroxide, di-tert-butyl peroxide, bis-tert-butyl-peroxyisopropyl benzene, tert-butyl-cumyl peroxide, benzoyl peroxide and potassium persulphate.

10. Process for producing a polymer composition according to one of claims 1-7, comprising the steps of
mixing 50 - 90 parts per weight of a propylene polymer having a crystallisation temperature T_{cryst} ≥ 117 °C, the propylene polymer being a propylene homopolymer and/or a copolymer containing up to 5 wt% of ethylene and/or C₄-C₈ α-olefins,
with 5-45 parts per weight of a mineral filler having an average particle size ≤ 1 µm and
with 4 - 35 wt% of a thermoplastic non-olefinic polymer having higher flexural modulus and higher impact strength than the propylene polymer, and
with 0.5 - 10 wt% of a compatibiliser which comprises at least one copolymer where at least one of the comonomers is propylene or one of the monomer units of the non-olefinic polymer,
melt mixing the resulting mixture at a temperature of at least 30 °C above the melt temperature Tₘ of the propylene polymer,
cooling and solidifying the polymer composition.

11. Use of a polymer composition according to one of claims 1 - 6 for the production of injection-moulded, extruded or blow moulded articles.

## Patentansprüche

1. Polymerzusammensetzung, umfassend
50 bis 90 Gew.-% eines Propylenpolymers mit einer Kristallisationstemperatur Tₖᵣᵢₛₜ ≥ = 117 °C, bevorzugt ≥ = 125 °C, wobei das Propylen polymer ein Propylenhomopolymer und/oder ein -copolymer, das bis zu 10 Gew.-% Ethylen und/oder C₄- bis C₈-α-Olefine enthält, ist,
4 bis 35 Gew.-% eines thermoplastischen nicht-olefinischen Polymers mit einem Biegemodul größer als das Propylenpolymer,
0,5 bis 10 Gew.-% eines Verträglichmachers, der wenigstens ein Copolymer umfasst, worin wenigstens eines der Comonomere Propylen oder eine der Monomereinheiten des nicht-olefinischen Polymers ist,
4,5 bis 45 Gew.-% einer dispersen Phase mit einer mittleren Teilchengröße ≤ 1 µm, die aus dem thermoplastischen nicht-olefinischen Polymer und dem Verträglichmacher besteht,
5 bis 45 Gew.-% eines Mineralfüllstoffes mit einer mittleren Teilchengröße ≤ 1 µm.

2. Polymerzusammensetztung gemäß Anspruch 1, **dadurch gekennzeichnet, dass** das Verhältnis des nicht-olefinischen Polymers zu dem Verträglichmacher wenigstens 1:1, bevorzugt wenigstens 2:1, bevorzugter wenigstens 3:1, beträgt.

3. Polymerzusammensetzung gemäß einem der Ansprüche 1 oder 2, **dadurch gekennzeichnet, dass** der Mineralfüllstoff ausgewählt ist aus einem oder mehreren von Calciumcarbonat, Talk und Montmorillonit.

4. Polymerzusammensetzung gemäß einem der Ansprüche 1 bis 3, **dadurch gekennzeichnet, dass** sie 55 bis 85 Gew.-% Propylenpolymer umfasst.

5. Polymerzusammensetzung gemäß einem der Ansprüche 1 bis 4, **dadurch gekennzeichnet, dass** sie 10 bis 25 Gew.-% des nicht-olefinischen Polymers und 2 bis 5 Gew.-% des Verträglichmachers umfasst.

6. Polymerzusammensetzung gemäß einem der Ansprüche 1 bis 5, **dadurch gekennzeichnet, dass** das nicht-olefinische Polymer Monomereinheiten umfasst, die zwischen der Glasübergangstemperatur T_{g} und der Schmelztemperatur Tₘ des Propylenpolymers radikalisch polymerisierbar sind.

7. Verfahren zum Herstellen einer Polymerzusammensetzung gemäß einem der Ansprüche 1 bis 6, umfassend die Schritte:
a) Vermischen von 50 bis 90 Gewichtsteilen eines kristallinen Propylenpolymers mit einer Kristallisationstemperatur Tₖᵣᵢₛₜ ≥ = 117 °C, wobei das Propylenpolymer ein Propylenhomopolymer und/oder ein -copolymer, das bis zu 10 Gew.-% Ethylen und/oder C₄- bis C₈-α-Olefine enthält, ist
mit 5 bis 45 Gewichtsteilen Monomerer, die zwischen der Glasübergangstemperatur T_{g} und der Schmelztemperatur Tₘ des Propylenpolymers radikalisch polymerisierbar sind,
und mit 0,1 bis 1,0 Gewichtsteilen eines oder mehrerer radikalbildender Mittel, bevorzugt organische Peroxide, und/oder Verwenden von radikalinitiierender Strahlung während des Schrittes b),
b) Polymerisieren der Monomere bei einer Temperatur zwischen der Glasübergangstemperatur T_{g} und der Schmelztemperatur Tₘ des Propylenpolymers, für 0,5 to 8 Stunden, und worin der Typ und die Menge der Monomere und die Polymerisationsbedingungen so ausgewählt sind, dass ein nicht-olefinisches Polymer mit einem höheren Biegemodul als das Propylenpolymer erhalten wird,
c) Schmelzmischen der erhaltenen Polymerzusammensetzung bei einer Temperatur von wenigstens 30 °C über der Schmelztemperatur Tₘ des Propylenpolymers,
d) Abkühlen und Verfestigen der Polymerzusammensetzung, wobei
insgesamt 5 bis 45 Gewichtsteile eines Mineralfüllstoffes mit einer mittleren Teilchengröße ≤ 1 µm vor, während oder nach dem Schritt a) und/oder b) und/oder c) zugesetzt werden mit der Maßgabe, dass einer Zugabe des Füllstoffes nach dem Schritt c) ein zusätzlicher Schmelzmischschritt vor dem Schritt d) folgt.

8. Verfahren gemäß Anspruch 7, **dadurch gekennzeichnet, dass** die Monomere ausgewählt sind aus einem oder mehreren von Styrol und Methylmethacrylat und optional einem oder mehreren von Maleinsäureanhydrid, Butadien, Methacrylat und Isopren.

9. Verfahren gemäß einem der Ansprüche 7 oder 8, **dadurch gekennzeichnet, dass** das Peroxid ausgewählt ist aus einem oder mehreren von tert-Butylperoxybenzoat, Dibenzoylperoxid, Di-tert-butylperoxid, Bis-tert-butylperoxyisopropylbenzol, tert-Butylcumylperoxid, Benzoylperoxid und Kaliumpersulfat.

10. Verfahren zum Herstellen einer Polymerzusammensetzung gemäß einem der Ansprüche 1 bis 7, umfassend die Schritte
Vermischen von 50 bis 90 Gewichtsteilen eines Propylenpolymers mit einer Kristallisationstemperatur Tₖᵣᵢₛₜ ≥ = 117 °C, wobei das Propylenpolymer ein Propylenhomopolymer und/oder ein -copolymer, das bis zu 5 Gew.-% Ethylen und/oder C₄- bis C₈-α-Olefine enthält, ist,
mit 5 bis 45 Gewichtsteilen eines Mineralfeststoffes mit einer mittleren Teilchengröße ≤1µm und
mit 4 bis 35 Gew.-% eines thermoplastischen nicht-olefinischen Polymers mit einem höheren Biegemodul und höherer Schlagfestigkeit als das Propylenpolymer und
mit 0,5 bis 10 Gew.-% eines Verträglichmachers, der wenigstens ein Copolymer umfasst, worin wenigstens eines der Comonomere Propylen oder eine der Monomereinheiten des nicht-olefinischen Polymers ist,
Schmelzmischen der erhaltenen Mischung bei einer Temperatur von wenigstens 30 °C über der Schmelztemperatur Tₘ des Propylenpolymers,
Abkühlen und Verfestigen der Polymerzusammensetzung.

11. Verwendung einer Polymerzusammensetzung gemäß einem der Ansprüche 1 bis 6 zur Herstellung von spritzgegossenen, extrudierten oder blasgeformten Gegenständen.

## Revendications

1. Composition de polymère comprenant
50 à 90 % en poids d'un polymère de propylène ayant une température de cristallisation T_{crist}≥117°C, de préférence ≥125°C, le polymère de propylène étant un homopolymère de propylène et/ou un copolymère contenant jusqu'à 10 % en poids d'éthylène et/ou d'α-oléfines en C₄-C₈,
4 à 35 % en poids d'un polymère non oléfinique thermoplastique ayant un module de flexion supérieur à celui du polymère de propylène,
0,5 à 10 % en poids d'un agent de compatibilité qui comprend au moins un copolymère dont au moins l'un des comonomères est le propylène ou l'un des motifs de monomère du polymère non oléfinique,
4,5 à 45 % en poids d'une phase dispersé ayant une granulométrie moyenne ≤1 µm, qui est constituée du polymère non oléfinique thermoplastique et de l'agent de compatibilité,
5 à 45 % en poids d'une charge minérale ayant une granulométrie moyenne <1 µm.

2. Composition de polymère selon la revendication 1, **caractérisée en ce que** le rapport du polymère non oléfinique sur l'agent de compatibilité est d'au moins 1/1, de préférence d'au moins 2/1, plus préférablement d'au moins 3/1.

3. Composition de polymère selon l'une des revendications 1 et 2, **caractérisée en ce que** la charge minérale est choisie parmi une ou plusieurs des charges carbonate de calcium, talc et montmorillonite.

4. Composition de polymère selon l'une des revendications 1 à 3, **caractérisée en ce qu'**elle comprend 55 à 85 % en poids de polymère de propylène.

5. Composition de polymère selon l'une des revendications 1 à 4, **caractérisée en ce qu'**elle comprend 10 à 25 % en poids du polymère non oléfinique et 2 à 5 % en poids de l'agent de compatibilité.

6. Composition de polymère selon l'une des revendications 1 à 5, **caractérisée en ce que** le polymère non oléfinique comprend des motifs de monomère qui sont polymérisables par voie radicalaire entre la température de transition vitreuse T_{g} et le point de fusion Tₘ du polymère de propylène.

7. Procédé pour produire une composition de polymère selon l'une des revendications 1 à 6, comprenant les étapes consistant à :
a) mélanger 50 à 90 parties en poids d'un polymère de propylène cristallin ayant une température de cristallisation T_{crist}≥117°C, le polymère de propylène étant un homopolymère de propylène et/ou un copolymère contenant jusqu'à 10% en poids d'éthylène et/ou d'α-oléfines en C₄-C₈,
avec 5 à 45 parties en poids de monomères polymérisables par voie radicalaire entre la température de transition vitreuse T_{g} et le point de fusion Tₘ du polymère de propylène,
et avec 0,1 à 1,0 partie en poids d'un ou plusieurs agents formant des radicaux, de préférence des peroxydes organiques, et/ou par utilisation d'un rayonnement initiant des radicaux durant l'étape b),
b) polymériser les monomères à une température comprise entre la température de transition vitreuse T_{g} et le point de fusion Tₘ du polymère de propylène, pendant 0,5 à 8 heures, le type et la quantité des monomères et les conditions de polymérisation étant sélectionnés pour donner un polymère non oléfinique ayant un module de flexion supérieur à celui du polymère de propylène,
c) mélanger à l'état fondu la composition de polymère résultante à une température supérieure d'au moins 30°C au point de fusion Tₘ du polymère de propylène,
d) refroidir et solidifier la composition de polymère,
un total de 5 à 45 parties en poids d'une charge minérale ayant une granulométrie moyenne ≤ 1 µm étant ajouté avant, pendant ou après les étapes a) et/ou b) et/ou c), avec la réserve qu'une addition de la charge après l'étape c) est suivie d'une étape de mélange à l'état fondu supplémentaire avant l'étape d).

8. Procédé selon la revendication 7, **caractérisé en ce que** les monomères sont choisis parmi un ou plusieurs des composés styrène et méthacrylate de méthyle et éventuellement un ou plusieurs des monomères anhydride maléique, butadiène, méthacrylate et isoprène.

9. Procédé selon l'une des revendications 7 et 8, **caractérisé en ce que** le peroxyde est choisi parmi un ou plusieurs des composés peroxybenzoate de tert-butyle, peroxyde de dibenzoyle, peroxyde de di-tert-butyle, bis-tert-butylperoxyisopropylbenzène, peroxyde de tert-butylcumyle, peroxyde de benzoyle et persulfate de potassium.

10. Procédé pour produire une composition de polymère selon l'une des revendications 1 à 7, comprenant les étapes consistant à :
mélanger 50 à 90 parties en poids d'un polymère de propylène ayant une température de cristallisation T_{crist} ≥ 117°C, le polymère de propylène étant un homopolymère de propylène et/ou un copolymère contenant jusqu'à 5 % en poids d'éthylène et/ou d'α-oléfines en C₄-C₈,
avec 5 à 45 parties en poids d'une charge minérale ayant une granulométrie moyenne ≤ 1 µm, et
avec 4 à 35 % en poids d'un polymère non oléfinique thermoplastique ayant un module de flexion et une résistance aux chocs supérieurs à ceux du polymère de propylène, et
avec 0,5 à 10 % en poids d'un agent de compatibilité qui comprend au moins un copolymère dont au moins l'un des comonomères est le propylène ou l'un des motifs de monomère du polymère non oléfinique,
mélanger à l'état fondu le mélange résultant à une température supérieure d'au moins 30°C au point de fusion Tₘ du polymère de propylène,
refroidir et solidifier la composition de polymère.

11. Utilisation d'une composition de polymère selon l'une des revendications 1 à 6 pour la production d'objets moulés par injection, extrudés ou moulés par soufflage.
